# EUROPÄISCHE PATENTANMELDUNG

(11) **EP 4 841 839 A1**
(43) Veröffentlichungstag der Anmeldung: **18.11.2026**
(21) Anmeldenummer: 25176267.0
(22) Anmeldetag: 14.05.2025
(51) Int. Cl.: H02G 3/12

(54) **ELEKTRISCHES/ELEKTRONISCHES INSTALLATIONSGERÄT DER GEBÄUDEINSTALLATIONSTECHNIK**

(71) Anmelder: Albrecht Jung GmbH & Co. KG, 58579 Schalksmühle (DE)
(72) Erfinder: Stuke, Oliver, 32756 Detmold (DE); Maslow, Stefan, 58339 Breckerfeld (DE); Stracke, Martin, 58762 Altena (DE); Soleinsky, Stefan, 58566 Kierspe (DE); Schulze zur Hörst, Andreas, 58511 Lüdenscheid (DE)
(74) Vertreter: Fobbe, Tobias

(57) **Zusammenfassung**

Offenbart ist ein elektrisches/elektronisches Installationsgerät S der Gebäudeinstallationstechnik, beispielsweise eine Steckdose, ein Schalter oder ein Taster, zum Einbau in eine mindestens zwei Schraubdome aufweisende Installationsdose D, wobei das elektrisches/elektronische Installationsgerät S einen Tragring T mit vier sich gegenüberliegenden Langlöchern L mit einer Langlochbreite LB aufweist, wobei jedes Langloch L eine Schraubenkopfausnehmung SKA mit einer Schraubenkopfausnehmungsbreite BSKA aufweist, wobei die Schraubenkopfausnehmungsbreite BSKA größer als die Langlochbreite LB ist, wobei in die Schraubdome eine Schraube SK mit einem Schraubenkopf einschraubbar ist,

Besonderes Kennzeichen ist, dass die Schraubenkopfausnehmungen SKA zur verbesserten und langlebigeren mechanischen Wirkverbindung zwischen Tragring T und Schraubenkopf im Wesentlichen eckig, insbesondere nicht als Kreis oder Ellipse, ausgeführt sind, wobei die Schraubenkopfausnehmungen SKA mindestens eine, bevorzugt mindestens zwei, geradlinige Seiten G1, G2 aufweisen und dass mindestens zwei gegenüberliegende Langlöcher L eine geradlinige Außenseite GA aufweisen, so dass trotz in die Schraubdome eingeschraubter Schrauben SK bei der Montage eine horizontale oder vertikale Translation ermöglicht wird.

## Beschreibung

Die Erfindung betrifft ein elektrisches/elektronisches Installationsgerät der Gebäudeinstallationstechnik, beispielsweise eine Steckdose, ein Schalter oder ein Taster, zum Einbau in eine mindestens zwei Schraubdome aufweisende Installationsdose, wobei das elektrisches/elektronische Installationsgerät einen Tragring mit vier sich gegenüberliegenden Langlöchern mit einer Langlochbreite aufweist, wobei jedes Langloch eine Schraubenkopfausnehmung mit einer Schraubenkopfausnehmungsbreite aufweist, wobei die Schraubenkopfausnehmungsbreite größer als die Langlochbreite ist, wobei in die Schraubdome eine Schraube mit einem Schraubenkopf einschraubbar ist.

Ferner betrifft die Erfindung eine Anordnung umfassend eine Installationsdose und ein daran mittels Schrauben festgelegtes elektrisches/elektronisches Installationsgerät der Gebäudeinstallationstechnik.

Sogenannte Funktionsmodule zur Installation in der Installationsdose hinter elektrische/elektronische Installationsgeräte der Gebäudeinstallationstechnik (siehe DE 10 2021 132 395 A1 oder DE 10 2024 126 894 B3) erlauben es, bestimmte Funktionalitäten, beispielsweise die Nachrüstung einer mittels mobilen Endgeräts schaltbaren Leuchte, zu gewinnen. Dazu wird ein solches Funktionsmodul hinter ein elektrisches/elektronisches Installationsgerät montiert. Aufgrund der engen Platzverhältnisse - regelmäßig befinden sich in der Installationsdose Kabelgut und das Funktionsmodul - werden die elektrischen/elektronischen Installationsgeräte mitunter unter hoher Vorspannung stehend mittels in Langlöcher eines Tragrings eingreifender Schrauben fixiert.

Aus EP 3 059 824 B1 ist ein elektrisches/elektronisches Installationsgerät der Gebäudeinstallationstechnik bekannt geworden, das es ermöglicht, einen etwaigen Versatz einer Installationsdose (beispielsweise durch eine nicht optimal ausgerichtete eingebaute Installationsdose) auszugleichen.

Nachteilig dabei ist jedoch, dass die kreisförmigen Schraubenkopfausnehmungen der Langlöcher keine besonders langlebige mechanische Wirkverbindung zwischen Tragring und Schraubenkopf bewirken, beispielsweise wenn das elektrische/elektronische Installationsgerät aufgrund von Platzmangel in der Installationsdose unter Vorspannung stehend eingebaut wird. Da Schraubenkopf und Schraubenkopfausnehmung kreisförmig sind, tendiert der Schraubenkopf dazu, in die Schraubenkopfausnehmung hineingezogen zu werden, so dass die mechanische Wirkverbindung zwischen Tragring und Schraubenkopf über die Zeit verloren geht und sich das elektrische/elektronische Installationsgerät ungünstigsten Falls löst.

Überdies erlauben die vorbekannten Langlöcher, ausgeführt als Ringabschnitte mit einer kreisförmigen Innen- und Außenseite, eine Translation des Tragrings auf der Dose mit eingeschraubten Schrauben nicht, da die kreisförmige Innen- und Außenseite der Ringabschnitte beziehungsweise Langlöcher, eine kreisförmige Ausrichtung vorgeben beziehungsweise erzwingen. Damit kollidieren die Schrauben bei dem Versuch einer Translation des elektrischen/elektronischen Installationsgerätes zur Feinausrichtung auf einer Installationsdose unmittelbar mit der Innen- oder Außenseite der Ringabschnitte.

Ausgehend von diesem diskutierten Stand der Technik liegt der Erfindung die Aufgabe zugrunde, ein elektrisches/elektronisches Installationsgerät der Gebäudeinstallationstechnik mit einem Tragring, beispielsweise eine Steckdose, ein Schalter oder ein Taster, zum Einbau in eine mindestens zwei Schraubdome aufweisende Installationsdose, zu schaffen, bei dem einerseits die mechanische Wirkverbindung des Tragrings und der Schrauben dauerhaft verbessert ist und zudem das elektrische/elektronische Installationsgerät auch bei vormontierten Schrauben zur Feinausrichtung translatiert werden kann.

Gelöst wird diese Aufgabe durch ein eingangs genanntes, gattungsgemäßes elektrisches/elektronisches Installationsgerät der Gebäudeinstallationstechnik mit den Merkmalen des Anspruchs 1. Vorteilhafte Ausgestaltungen ergeben sich aus den abhängigen Ansprüchen und der Beschreibung.

Ein erster Kerngedanke der Erfindung besteht darin, dass die Schraubenkopfausnehmungen zur verbesserten und langlebigeren mechanischen Wirkverbindung zwischen Tragring und Schraubenkopf im Wesentlichen eckig, insbesondere nicht als Kreis oder Ellipse, ausgeführt sind. Dabei weisen die Schraubenkopfausnehmungen mindestens eine, bevorzugt mindestens zwei, geradlinige Seiten auf. Damit wird auf geschickte Art sichergestellt, dass die mechanische Wirkverbindung zwischen Tragring und Schraubenkopf effektiv verbessert wird, indem das Vorsehen geradliniger Seiten der Schraubenkopfausnehmungen dafür sorgen, dass der (kreisförmige) Schraubenkopf nicht wie beim Stand der Technik zu einem Kreismittelpunkt durch Vorgabe einer Vorzugsrichtung durch Implementierung einer gebogenen Seite gezogen wird.

Ein zweiter Kerngedanke der Erfindung besteht andererseits darin, dass mindestens zwei gegenüberliegende Langlöcher eine geradlinige Außenseite aufweisen. Damit wird die Option geschaffen, dass trotz in die Schraubdome eingeschraubter Schrauben bei der Montage eine horizontale oder vertikale Translation ermöglicht wird.

Unter dem Ausdruck "im Wesentlichen eckig" wird im Sinne der Erfindung verstanden, dass ein Krümmungsradius der Schraubdome der Installationsdose größer ist als derjenige einer gegebenenfalls (fertigungstechnisch bedingt) abgerundeten Ecke der Schraubenkopfausnehmung, insbesondere mindestens doppelt so groß, um die Vorteile der Erfindung besonders zur Ausprägung zu bringen.

Gemäß einer besonders bevorzugten Weiterbildung des erfindungsgemäßen elektrischen/elektronischen Installationsgerätes beträgt die Anzahl der Ecken der Schraubenkopfausnehmungen mindestens drei.

In einer bevorzugten Weiterbildung des erfindungsgemäßen elektrischen/elektronischen Installationsgerätes sind die Schraubenkopfausnehmungen rechteckig ausgeführt. Dabei wird darunter auch verstanden, dass eine oder zwei Ecken der Schraubenkopfausnehmungen mit den Langlöchern überlappen (und somit nicht sichtbar sind).

Gemäß einer besonders bevorzugten Weiterbildung des erfindungsgemäßen elektrischen/elektronischen Installationsgerätes sind die Schraubenkopfausnehmungen punktsymmetrisch bezüglich der Mitte des Tragrings ausgeführt. Damit wird die Symmetrie einer Installationsdose aufgegriffen.

In einer bevorzugten Weiterbildung des erfindungsgemäßen elektrischen/elektronischen Installationsgerätes grenzen die Schraubenkopfausnehmungen an gegenüberliegenden Seiten an einen ersten und zweiten Langlochteil, so dass die Schraubenkopfausnehmungen nicht am Ende eines Langlochs liegen. Damit wird der Toleranzausgleich bezüglich einer schief in einen Schraubdom der Installationsdose eingeschraubten Schraube maximiert (sogar in unterschiedliche Richtungen), ohne die anderen Vorteile der Erfindung zu verlieren. Bevorzugt erstreckt sich die addierte Längserstreckung des ersten und zweiten Langlochteils und der Schraubenkopfausnehmung auf einen Wert von mindestes 2,5 cm, bevorzugt mindestens 3cm. Jedes Langlochteil weist dabei eine Längserstreckung von mindestens 0,6 cm auf.

Nachfolgend ist die Erfindung unter Bezugnahme auf die beigefügten Figuren anhand diverser Ausführungsbeispiele beschrieben. Es zeigen:
- **Fig. 1:**: eine schematische Draufsicht auf ein erfindungsgemäßes elektrisches/elektronisches Installationsgerät mit besonderer Schraubenkopfausnehmung (ohne Designabdeckung),
- **Fig. 2:**: eine schematische Draufsicht auf ein in einer Dose mit zwei Schrauben festgelegtes erfindungsgemäßes elektrisches/elektronisches Installationsgerät mit ermöglichter Translationsfähigkeit auf der Dose (schwarzer Doppelpfeil), und
- **Fig. 3:**: eine schematische Draufsicht auf ein in einer Dose mit vier Schrauben festgelegtes erfindungsgemäßes elektrisches/elektronisches Installationsgerät.

In den verschiedenen Figuren sind gleiche Teile stets mit den gleichen Bezugszeichen versehen und werden daher in der Regel auch jeweils nur einmal benannt beziehungsweise erwähnt.

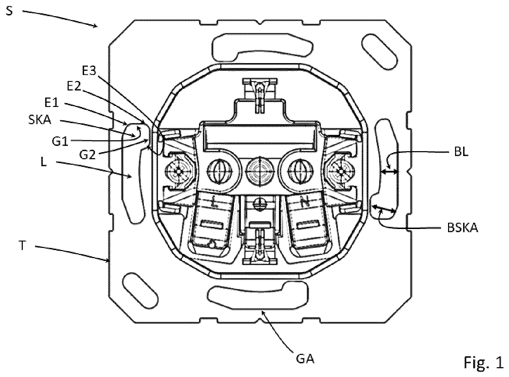

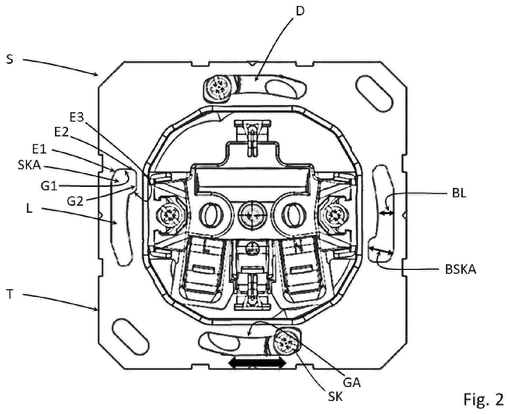

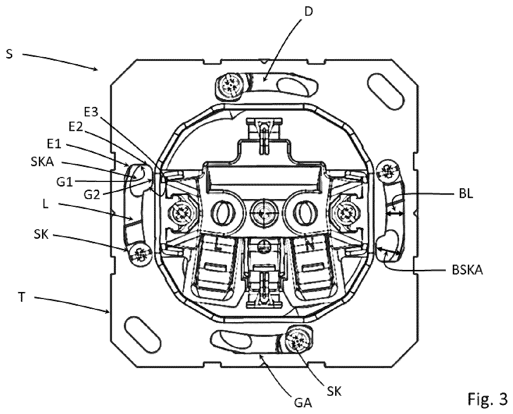

Die Figur 1 zeigt ein elektrisches/elektronisches Installationsgerät S der Gebäudeinstallationstechnik, hier eine Steckdose zum Einbau in eine mindestens zwei Schraubdome aufweisende Installationsdose D (der Übersichtlichkeit halber erst in den Figuren 2 und 3 dargestellt), wobei das elektrisches/elektronische Installationsgerät S einen Tragring T mit vier sich gegenüberliegenden Langlöchern L mit einer Langlochbreite BL aufweist. Dabei umfasst jedes Langloch L eine Schraubenkopfausnehmung SKA mit einer Schraubenkopfausnehmungsbreite BSKA, die größer als die Langlochbreite BL ist.
Figur 1 zeigt dabei, dass die Schraubenkopfausnehmungen SKA zur verbesserten und langlebigeren mechanischen Wirkverbindung zwischen Tragring T und Schraubenkopf im Wesentlichen eckig, insbesondere nicht als Kreis oder Ellipse, ausgeführt sind. Dabei weisen die Schraubenkopfausnehmungen SKA mindestens eine, bevorzugt mindestens zwei, geradlinige Seiten G1, G2 auf, die wirksam dazu beitragen, dass die Schraubenkopfausnehmung SKA nicht in Richtung des Schraubenkopfes der Schraube SK gedrückt wird, was zum Lösen oder Schwächen der mechanischen Wirkverbindung zwischen Tragring T und Schraubenkopf führen würde.
Fig. 2 zeigt ein elektrisches/elektronisches Installationsgerät S der Gebäudeinstallationstechnik, welches auf einer Installationsdose D angeordnet ist. Dabei sind zwei Schrauben SK in die Schraubdome der Installationsdose eingeschraubt, jedoch nicht so weit, dass sie den Tragring T mit dem Schraubenkopf berühren. Aufgrund des vorteilhaften erfindungsgemäßen Merkmals, dass mindestens zwei gegenüberliegende Langlöcher L eine geradlinige Außenseite GA aufweisen, wird bei der Montage eine horizontale oder vertikale Translation ermöglicht. Dabei wird bewusst von einer ringartigen Ausgestaltung der Langlöcher L aus dem Stand der Technik Abstand genommen, um die horizontale oder vertikale Translationsfähigkeit zu ermöglichen. Etwaige Nachteile bezüglich der Stabilität des Tragrings T werden dabei bewusst zugunsten der Translationsfähigkeit (angedeutet durch den schwarzen Doppelpfeil) in Kauf genommen.
Fig. 3 zeigt ein elektrisches/elektronisches Installationsgerät S der Gebäudeinstallationstechnik, welches auf einer Installationsdose D festgelegt ist. Vorliegend sind vier Schrauben SK in die Schraubdome der Installationsdose eingeschraubt (wobei eigentlich zwei ausreichen würden, hier jedoch eine Ausführungsform mit maximaler mechanischer Wirkverbindung zwischen Tragring T und Installationsdose D). Dabei werden die beiden Schrauben SK rechts und links regelmäßig erst nach dem Fixieren gemäß Figur 2 eingeschraubt.

Die Erfindung ist anhand von Ausführungsbeispielen beschrieben. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen erläutert werden müsste.

### Bezugszeichenliste

- BL: Langlochbreite
- BSKA: Schraubenkopfausnehmungsbreite
- D: Installationsdose
- E1, E2, E3: Ecke
- G1, G2: geradlinige Seite
- GA: geradlinige Außenseite
- L: Langloch
- S: Installationsgerät
- SK: Schraube
- SKA: Schraubenkopfausnehmung
- T: Tragring

## Patentansprüche

1. Elektrisches/elektronisches Installationsgerät (S) der Gebäudeinstallationstechnik, beispielsweise eine Steckdose, ein Schalter oder ein Taster, zum Einbau in eine mindestens zwei Schraubdome aufweisende Installationsdose (D), wobei das elektrisches/elektronische Installationsgerät (S) einen Tragring (T) mit vier sich gegenüberliegenden Langlöchern (L) mit einer Langlochbreite (LB) aufweist, wobei jedes Langloch (L) eine Schraubenkopfausnehmung (SKA) mit einer Schraubenkopfausnehmungsbreite (BSKA) aufweist, wobei die Schraubenkopfausnehmungsbreite (BSKA) größer als die Langlochbreite (LB) ist, wobei in die Schraubdome eine Schraube (SK) mit einem Schraubenkopf einschraubbar ist,
**dadurch gekennzeichnet, dass** die Schraubenkopfausnehmungen (SKA) zur verbesserten und langlebigeren mechanischen Wirkverbindung zwischen Tragring (T) und Schraubenkopf im Wesentlichen eckig, insbesondere nicht als Kreis oder Ellipse, ausgeführt sind, wobei die Schraubenkopfausnehmungen (SKA) mindestens eine, bevorzugt mindestens zwei, geradlinige Seiten (G1, G2) aufweisen und dass mindestens zwei gegenüberliegende Langlöcher (L) eine geradlinige Außenseite (GA) aufweisen, so dass trotz in die Schraubdome eingeschraubter Schrauben (SK) bei der Montage eine horizontale oder vertikale Translation ermöglicht wird.

2. Elektrisches/elektronisches Installationsgerät (S) der Gebäudeinstallationstechnik nach Anspruch 1, **dadurch gekennzeichnet, dass** die Anzahl der Ecken (E1, E2, E3) der Schraubenkopfausnehmungen (SKA) mindestens drei beträgt.

3. Elektrisches/elektronisches Installationsgerät (S) der Gebäudeinstallationstechnik nach Anspruch 2, **dadurch gekennzeichnet, dass** die Schraubenkopfausnehmungen (SKA) rechteckig ausgeführt sind.

4. Elektrisches/elektronisches Installationsgerät (S) der Gebäudeinstallationstechnik nach einem der Ansprüche 1 bis 3, **dadurch gekennzeichnet, dass** die Schraubenkopfausnehmungen (SKA) punktsymmetrisch bezüglich der Mitte des Tragrings (T) ausgeführt sind.

5. Elektrisches/elektronisches Installationsgerät (S) der Gebäudeinstallationstechnik nach einem der Ansprüche 1 bis 4, **dadurch gekennzeichnet, dass** die Schraubenkopfausnehmungen (SKA) an gegenüberliegenden Seiten an einen ersten und zweiten Langlochteil grenzen.

6. Anordnung umfassend eine Installationsdose (D) und ein daran mittels Schrauben (SK) festgelegtes elektrisches/elektronisches Installationsgerät (S) der Gebäudeinstallationstechnik nach einem der Ansprüche 1 bis 6.
